# EUROPÄISCHE PATENTSCHRIFT

(11) **EP 3 701 172 B1**
(45) Veröffentlichungstag und Bekanntmachung des Hinweises auf die Patenterteilung: **30.08.2023**
(21) Anmeldenummer: 18768851.0
(22) Anmeldetag: 10.09.2018
(51) Int. Cl.: F16J 15/06, F16L 11/12, G01N 23/10, C08K 3/08

(54) **SCHLAUCH MIT DETEKTIERBARER SCHICHT**
FLEXIBLE TUBE HAVING A DETECTABLE LAYER
TUYAU À COUCHE DÉTECTABLE

(30) Priorität: 27.10.2017 DE 102017219337; 29.08.2018 DE 102018214615
(43) Veröffentlichungstag der Anmeldung: 02.09.2020
(73) Patentinhaber: ContiTech Schlauch GmbH, 30165 Hannover (DE)
(72) Erfinder: ONKEN, Kristian, 30419 Hannover (DE); BORVITZ, Dieter, 30419 Hannover (DE)
(74) Vertreter: Continental Corporation
(86) Internationale Anmeldenummer: PCT/EP2018/074240
(87) Internationale Veröffentlichungsnummer: WO 2019/081114

(56) Entgegenhaltungen:
- EP-A1- 1 650 556
- WO-A1-2005/061649
- WO-A1-2006/026823
- US-A1- 2012 241 589
- US-A1- 2016 267 302
- US-B1- 6 177 113

## Beschreibung

Die vorliegende Anmeldung betrifft einen mehrschichtigen Schlauch umfassend mindestens eine Schicht, die mindestens ein Polymer und mindestens einen berührungslos detektierbaren Marker, die Verwendung dieses Schlauchs mit dem berührungslos detektierbaren Marker zur Detektion der Abnutzung des Schlauches, sowie ein Verfahren zur Detektion der Abnutzung dieses Schlauches.

Üblicherweise werden flexible Schläuche bzw. Dichtungen aus Kunststoffen, Elastomeren, thermoplastischen Elastomeren oder einer Kombination daraus hergestellt.

Diese derzeit verwendeten Schläuche, insbesondere Lebensmittel- und Trinkwasserschläuche, bzw. Dichtungen die in solchen Systemen eingesetzt werden, haben den Nachteil, dass die üblicherweise verwendeten Polymere mit den gängigen Inline-Detektionsverfahren, wie Röntgendetektion oder Metalldetektion, aufgrund der geringen Polymerdichte nicht oder nur schwierig erfasst werden können.

Eine einfache Polymer-Detektierbarkeit ist jedoch vorteilhaft, da bei einer ungewollten Ablösung der Schlauchseele bzw. einer alternden und sich auflösenden Dichtung eine Kontaminierung des Mediums, das den Schlauch oder die Dichtung durchläuft, erfolgen kann, was zu hohen Folgekosten bedingt durch mögliche Rückrufaktionen, Reinigungsaktionen sowie einen Absatzverlust durch den daraus resultierenden Imageschaden führen kann.

Während Metallpartikel in einem Produkt relativ einfach mit einem Metalldetektor und nichtmetallische Verunreinigungen mit hoher Dichte, wie z.B. Glas, Steine oder Nussschalen, relativ einfach mit einem Röntgendetektor erfasst werden können, bleibt die Detektion von den in Schläuchen oder Dichtungen üblicherweise eingesetzten Polymeren, wie Elastomeren, thermoplastischen Elastomeren und Kunststoffen, weiterhin problematisch.

Ein weiterer Aspekt dieser Problematik ist, dass beispielsweise Schläuche oder Dichtungen für den Lebensmittel- und Trinkwasserbereich nur aus Substanzen gefertigt werden dürfen, die den dafür vorgesehenen gesetzlichen Regularien entsprechen bzw. in entsprechenden Positivlisten aufgeführt sind. Dies schränkt den Schlauch- bzw. Dichtungshersteller in seiner Materialauswahl stark ein, um eine solche Detektierbarkeit zu erreichen.

Die Dokumente US 2012/0241589 , WO 2006/026823 und EP 1 650 556 offenbaren Dichtungen und andere Produkte, die einen berührungslos detektierbaren Marker umfassen, der mindestens einen mittels Röntgenstrahlung und/oder einem elektromagnetischen Feld detektierbaren Stoff umfasst.

Die Aufgabe der vorliegenden Erfindung ist es, die aus dem Stand der Technik bekannten Nachteile zu beheben. Insbesondere soll ein Schlauch aus einem Material bereitgestellt werden, das mit den gängigen Inline-Detektionsverfahren, wie Röntgendetektion oder Metalldetektion, einfach und sicher detektiert werden kann. Zudem soll das Material für alle gängigen Anwendungen im Lebensmittel- und Trinkwasserbereich einsetzbar sein.

Obige Aufgabe wird durch einen Schlauch gemäß Anspruch 1 gelöst.

Unter Dichtung werden Elemente oder Konstruktionen verstanden, die die Aufgabe haben, ungewollte Stoffübergänge von einem Raum in einen anderen zu verhindern oder zu begrenzen bzw. eine Schicht aus einem geeigneten Material, die zwischen zwei Teile eines Geräts oder einer Vorrichtung zur Abdichtung gelegt wird. Vorzugsweise wird eine Dichtung zwischen zwei Schläuchen oder zwei Rohren oder anderen Hohlkörpern montiert, um einen Austritt von einem Medium, dass diese Schläuche, Rohre oder sonstigen Hohlkörper durchströmt, zu verhindern.

Der erfindungsgemäße Schlauch weist mindestens einen berührungslos detektierbaren Marker auf. Unter berührungslos detektierbar wird ein Marker verstanden, der ohne physischen Kontakt zwischen Messgerät und Marker durch das Messgerät detektiert werden kann. Der berührungslos detektierbare Marker umfasst ein mittels Röntgenstrahlung und/oder eines elektromagnetischen Feldes detektierbaren Stoff.

Damit ein Stoff mittels Röntgenstrahlung detektierbar ist, weist er vorzugsweise eine Dichte von mehr als 1g/cm³ auf.

Ein mittels eines elektromagnetischen Feldes detektierbarer Stoff muss magnetisch sein. Unter einem magnetischen Stoff versteht man vorzugsweise solche Werkstoffe, die unter Einwirkung eines äußeren Magnetfeldes auf Dauer magnetisiert werden. Insbesondere kommen ferromagnetische und ferrimagnetische Materialien in Frage aber auch Antiferromagnetika, Paramagnetika und Superparamagnetika.

Der erfindungsgemäße Schlauch ist ein mehrschichtiger Schlauch. Die einzelnen Schichten können aus Materialien unterschiedlicher chemischer Zusammensetzung aufgebaut sein. Mehrschichtige Schläuche oder mehrschichtige Dichtungen haben den Vorteil, dass sie so aufgebaut werden können, dass die verwendeten Materialien jeweils optimal auf das Medium, das durch den Schlauch bzw. die Dichtung läuft, sowie auf das Medium, das den Schlauch bzw. die Dichtung von außen umgibt, angepasst werden können.

Es ist bevorzugt, dass der Schlauch mindestens 2, 3 oder 4 Schichten aufweist, wobei 2 oder 3 Schichten besonders bevorzugt sind.

Der mindestens eine berührungslos detektierbare Marker kann vorzugsweise in einer Schicht, in mehreren Schichten aber auch in allen Schichten des erfindungsgemäßen Schlauches vorkommen.

Der erfindungsgemäße Schlauch ist vorzugsweise derart, dass der berührungslos detektierbare Marker mindestens einen mittels Röntgenstrahlung und/oder einem elektromagnetischen Feld detektierbaren Stoff mit einer mittleren Partikelgröße d₉₀ von 0,2 bis 500 µm, bevorzugt von 0,25 bis 300 µm und besonders bevorzugt von 2 bis 150 µm umfasst.

Die Partikelgröße wird durch die Cyclosizer Methode gemäß DIN EN ISO 1248:2008-06 bestimmt.

Schläuche oder Dichtungen, die einen mittels Röntgenstrahlung und/oder einem elektromagnetischen Feld detektierbaren Stoff mit einer kleineren Partikelgröße, aufweisen, haben den Nachteil, dass durch die relativ kleinen Partikel diese mit einem handelsüblichen Detektor nur schwer zu detektieren sind.

Schläuche oder Dichtungen, die einen mittels Röntgenstrahlung und/oder einem elektromagnetischen Feld detektierbaren Stoff mit einer größeren Partikelgröße, aufweisen, haben den Nachteil, dass durch die Einarbeitung von relativ großen Partikeln in die Schlauchmatrix bzw. die Dichtungsmatrix die mechanischen Eigenschaften des Elastomers bzw. des Schlauches bzw. der Dichtung herabgesetzt wird.

Der erfindungsgemäße Schlauch ist vorzugsweise derart, dass das mindestens eine Polymer einen Kunststoff, ein Elastomer und/oder ein thermoplastisches Elastomer umfasst.

Kunststoffe sind Stoffe, deren Grundbestandteile synthetisch oder halbsynthetisch erzeugte Polymere vorzugsweise mit organischen Gruppen sind.

Elastomere sind Polymere mit gummielastischem Verhalten, die bei 20 °C wiederholt mindestens auf das Zweifache ihrer Länge gedehnt werden können und nach Aufhebung des für die Dehnung erforderlichen Zwanges sofort wieder annähernd ihre Ausgangsdimensionen einnehmen. Elastomere sind weitmaschige, in der Regel vernetzte, hochpolymere Werkstoffe, die bei der Gebrauchstemperatur aufgrund der Verknüpfung der einzelnen Polymerketten an den Vernetzungsstellen nicht viskos fließen können.

Elastomere werden im Allgemeinen durch Vulkanisation von natürlichen Kautschuken (Naturkautschuken) und synthetischen Kautschuken (Synthesekautschuken) hergestellt. Unter Vulkanisation versteht man die Überführung von plastischen, kautschukartigen, ungesättigten oder gesättigten Polymeren in den gummielastischen Zustand, vorzugsweise durch Vernetzung mit Schwefel bzw. Schwefelverbindungen. Dabei werden die einzelnen Polymerketten irreversibel durch kovalente Bindungen miteinander verbunden.

Bei manchen Synthesekautschuken werden auch schwefelfreie Vernetzer als Vulkanisationsmittel verwendet, wie z. B. Peroxide, Harze, Bisphenole, Metalloxide (MgO, ZnO). Zudem gibt es auch rein physikalische Methoden der Vernetzung (z.B. mittels energiereicher Strahlung).

Thermoplastische Elastomere sind Stoffe, die sich bei Raumtemperatur vergleichbar den klassischen Elastomeren verhalten, sich jedoch unter Wärmezufuhr plastisch verformen lassen und somit ein thermoplastisches Verhalten zeigen. Thermoplastische Elastomere weisen im Idealfall eine Kombination der Gebrauchseigenschaften von Elastomeren und den Verarbeitungseigenschaften von Thermoplasten auf. Dies kann dadurch erreicht werden, dass in den Makromolekülen der entsprechenden Kunststoffe gleichzeitig weiche und elastische Komponenten mit hoher Dehnbarkeit und niedriger Glasübergangstemperatur sowie harte, kristallisierbare Segmente mit geringer Dehnbarkeit und hoher Glasübergangstemperatur auftreten (physikalische Vernetzung). Die Weich- und Hartsegmente müssen miteinander unverträglich sein und als individuelle Phasen vorliegen. Das kann erreicht werden, indem weiche Elastomerpartikel in einer harten Polymermatrix eingelagert werden oder indem Blockcopolymere mit unverträglichen harten und weichen Segmenten eingesetzt werden. Kennzeichnend für thermoplastische Elastomere sind somit Vernetzungsstellen, die durch Erwärmen reversibel spaltbar sind. Oberhalb der entsprechenden Temperatur verhalten sich die Polymere wie Thermoplaste, unterhalb wie Elastomere. Damit entspricht das Gebrauchsverhalten demjenigen von Elastomeren und das Verarbeitungsverhalten demjenigen von Thermoplasten.

Der in dem erfindungsgemäßen Schlauch eingesetzte Kunststoff ist im Wesentlichen nicht beschränkt. Es ist jedoch bevorzugt, wenn der mindestens eine Kunststoff ausgewählt ist aus der Gruppe bestehend aus Polyethylen, ultrahochmolekularem Polyethylen (UPE), Polypropylen, Polyamid, Polyester, aromatische Polyester, Polyvinylchlorid, Polyethersulfon, Polyetheretherketon (PEEK), Ethylen-Tetrafluorethylen (ETFE), chlorierte Fluorkunststoffe (PCTFE, ECTFE),Tetrafluorethylen-Hexafluorpropylen-Vinylidenfluorid-Terpolymer (THV), Polyvinylidenfluorid (PVF), Polyvinylidendifluorid (PVDF), Perfluoralkoxy-Polymer (MFA + PFA), Tetrafluorethylen-Hexafluorpropylen-Copolymer (FEP), Polytetrafluorethylen (PTFE), sowie Mischungen und Copolymeren davon. Die Kunststoffe können zudem weitere Zusatzstoffe enthalten (z.B. Antistatika, Färbemittel, Geruchsabsorber, Haftvermittler, usw.)

Das in dem erfindungsgemäßen Schlauch eingesetzte Elastomer ist im Wesentlichen nicht beschränkt. Es ist jedoch bevorzugt, wenn das mindestens eine Elastomer ausgewählt ist aus der Gruppe bestehend aus Acrylatkautschuken (AEM), Ethylen-Vinylacetat-Kautschuken (EVA), Polybutadien (BR), Chlorsulfoniertes Polyethylen (CSM), Chloriertes Polyethylen (CM), Epichlorhydrin-Kautschuken (ECO), Chloroprenkautschuken (CR), Polyisopren (IR), Fluorkautschuk (FPM, FKM, FFKM), Styrol-Butadien-Kautschuken (SBR), Isobutylen-Isopren-Kautschuken (IIR), halogenierten Isobutylen-Isopren- Kautschuken (CIIR + BIIR), Acrylnitril-Butadien-Kautschuken (NBR), teilhydrierten oder vollständig hydrierten Acrylnitrilbutadien-Kautschuken (HNBR), Verschnitte aus NBR mit PVC (NBR-PVC), teihydrierten oder vollständig hydrierten carboxylierten Acrylnitrilbutadien-Kautschuken, Ethylen-Propylen-Dien-Kautschuken (EPDM), Ethylen-Propylen- Kautschuken (EPM), Naturkautschuk (NR), bromierten Isobutylen-Paramethylstyrol-Kautschuken, Silikonkautschuken (MVQ), sowie Mischungen, Verschnitte und Copolymeren davon.

Das in dem erfindungsgemäßen Schlauch eingesetzte thermoplastische Elastomer ist im Wesentlichen nicht beschränkt. Es ist jedoch bevorzugt, wenn das mindestens eine thermoplastische Elastomer ausgewählt ist aus der Gruppe bestehend aus thermoplasischen Copolyamid (TPA-A), thermoplastischen Polyesterelastomer (TPE-E), Thermoplastische Elastomere auf Olefinbasis (TPE-O), Styrol-Blockcopolymere (TPE-S), Thermoplastische Elastomere auf Urethanbasis (TPE-U), Thermoplastische Vulkanisate oder vernetzte thermoplastische Elastomere auf Olefinbasis (TPE-V).

Das mindestens eine Elastomer umfasst besonders bevorzugt Ethylen-Propylen-Dien-Kautschuke (EPDM), Acrylnitril-Butadien-Kautschuken (NBR), Naturkautschuk (NR), Isobutylen-Isopren-Kautschuken (IIR) und/oder halogenierten Isobutylen-Isopren- Kautschuken (CIIR bzw. BIIR), sowie Mischungen, Verschnitte und Copolymere davon.

Der mindestens eine Kunststoff umfasst besonders bevorzugt Polyethylen (PE), ultrahochmolekulares Polyethylen (UPE), Tetrafluorethylen-Hexafluorpropylen-Vinylidenfluorid-Terpolymer (THV), Polyvinylidendifluorid (PVDF) und/oder Tetrafluorethylen-Hexafluorpropylen-Copolymer (FEP), sowie Mischungen und Copolymere davon.

Metallpartikel können relativ einfach mittel Röntgenstrahlung detektiert werden. Sollen die Metallpartikel neben oder anstelle der Röntgenstrahlung auch mittels eines elektromagnetischen Feldes detektiert werden, so ist es zweckmäßig, wenn die Metallpartikel ferromagnetische, ferrimagnetische, antiferromagnetische, paramagnetische und/oder superparamagnetische Eigenschaften aufweisen. Metalle sind diejenigen chemischen Elemente, die sich im Gegensatz zu den Nichtmetallen im Periodensystem links der diagonalen Trennungslinie beginnend mit dem Element Beryllium (2. Gruppe) bis hin zum Polonium (16. Gruppe) befinden, sowie deren Legierungen und intermetallische Verbindungen mit charakteristischen metallischen Eigenschaften.

Diese Metalle können neben oder anstelle der Metallpartikel auch als Metallfasern vorliegen. Eine Faser ist ein lineares, elementares Gebilde, das aus mindestens einem Faserstoff, hier mindestens ein Metall, wie vorstehend definiert, besteht und eine äußere Faserform aufweist. Eine Faser ist ein im Verhältnis zu ihrer Länge relative dünnes, vorzugsweise flexibles Gebilde. Eine Faser weist vorzugsweise ein Verhältnis von Länge zu Durchmesser zwischen 5:1 und 10.000:1 auf.

Spinelle, vorzugsweise in Form von Partikeln, können relativ einfach mittels Röntgenstrahlung detektiert werden.

Sollen die Spinelle neben oder anstellte der Röntgenstrahlung auch mittels eines elektromagnetischen Feldes detektiert werden, so ist es zweckmäßig, wenn die Metallpartikel ferromagnetische, ferrimagnetische, antiferromagnetische, paramagnetische und/oder superparamagnetische Eigenschaften aufweisen. Spinelle sind chemische Verbindungen des allgemeinen Typs [AₓB₂₋ₓ]Y₄, wobei A, B Metallkationen sind, deren Oxidationszahl die Summe 8 ergibt, und Y vorwiegend ein zweiwertiges Sauerstoff- bzw. Schwefel ist. A ist ein zweiwertiges Metallatomm wie z.B. Mg, Fe, Zn, Mn, Co, Ni, Cu, Cd, B ist ein drei- oder vierwertiges Metall wie z. B. Al, Fe, V, Cr, Ti und x = 0-1.

Ferrimagnetische Keramiken gehören zu den oxidkeramischen Werkstoffen und weisen ferrimagnetische Eigenschaften auf, weshalb sie mittels eines elektromagnetischen Feldes detektierbar sind. Die Basis von ferrigmagentischer Keramik bildet das Oxid des dreiwertigen Eisenkations Fe₂O₃, das mit Oxiden zweiwertiger Kationen Kristallstrukturen mit verschieden besetzten Untergittern und damit variable magnetische Eigenschaften bildet. Man unterscheidet weichmagnetische, hartmagnetische und Rechteckferrite. Sie basieren auf Kristallstrukturen, die sich isomorph zu den in der Natur vorkommenden Mineralien Granat (A²⁺₃B³⁺₂[SiO₄]₃ mit A²⁺ = Mg²⁺, Fe²⁺, Mn²⁺, Ca²⁺ und B³⁺ = Al³⁺, Fe³⁺, Cr³⁺), Spinell (MgO·Al₂O₃), Magnetoplumbit (PbO·6Fe₂O₃) und Perowskit (CaO·TiO₂) verhalten.

Der erfindungsgemäße Schlauch ist derart, dass der mittels Röntgenstrahlung und/oder einem elektromagnetischen Feld detektierbare Stoff ein Mischoxid wenigstens zweier Metalle mit den Metallkomponenten Eisen, Kobalt, Nickel, Zinn, Zink, Mangan, Kupfer, Barium, Magnesium, Lithium oder Yttrium umfasst.

Vorzugsweise umfasst der mittels Röntgenstrahlung und/oder einem elektromagnetischen Feld detektierbare Stoff in dem erfindungsgemäßen Schlauch oder der erfindungsgemäßen Dichtung einen Stoff, der die allgemeinen Formel M^{II}(Fe^{III})₂O₄ aufweist, wobei M, Eisen, Kobalt, Nickel, Zinn, Zink, Mangan, Kupfer, Barium, Magnesium, Lithium oder Yttrium ist.

Besonders bevorzugt umfasst der mittels Röntgenstrahlung und/oder einem elektromagnetischen Feld detektierbare Stoff in dem erfindungsgemäßen Schlauch oder der erfindungsgemäßen Dichtung Fe^{II}(Fe^{III})₂O₄ , das auch unter dem Trivialnamen "Magnetit" bekannt ist.

Fe^{II}(Fe^{III})₂O₄ hat den Vorteil, dass es eine hohe chemische Beständigkeit aufweist, dass es magnetisch ist, dass es elektrisch leitfähig ist, dass es alle LBM-Zulassungen hat, dass es als natürlich vorkommendes Material nicht giftig, dass es kostengünstig ist und dass es mittels magnetischer Detektion und Röntgendetektion erfassbar ist.

Der erfindungsgemäße Schlauch ist vorzugsweise derart, dass der mittels Röntgenstrahlung und/oder einem elektromagnetischen Feld detektierbare Stoff in einer Menge von 0,5 bis 80 Gew.-%, bevorzugt von 2,5 bis 60 Gew.-%, bezogen auf das Gesamtgewicht der jeweiligen Schlauchschicht bzw. Dichtungsschicht, in dieser Schlauchschicht bzw. Dichtungsschicht vorliegt.

Da es sich bei dem erfindungsgemäßen Schlauch um einen mehrschichtigen Schlauch handelt, so ist es bevorzugt, dass der berührungslos detektierbare Marker, der mindestens einen mittels Röntgenstrahlung und/oder einem elektromagnetischen Feld detektierbare Stoff umfasst, mindestens in der innersten Schicht des mehrschichtigen Schlauches vorliegt.

Dies hat den Vorteil, dass die Abnutzung des Schlauchmaterials, das in direktem Kontakt mit dem Medium steht, das durch den Schlauch geleitet wird, unmittelbar durch die Detektion des mindestens einen berührungslos detektierbaren Markers erfasst werden kann.

Es sind auch Ausführungsformen des erfindungsgemäßen Schlauches denkbar, in denen der mindestens eine berührungslos detektierbare Marker in einer Zwischenschicht, die nicht die innerste und nicht die äußerste Schicht darstellt vorliegt. Dies hat den Vorteil, dass der mindestens eine berührungslos detektierbare Marker zur Detektion der Abnutzung (Abriebindikator) benutzt werden kann. Sollte die Innenschicht komplett abgerieben sein, würden die ersten berührungslos detektierbaren Markerpartikel detektiert werden können, so dass der Anwender erkennen kann, dass der Schlauch zu tauschen ist.

Die Wandstärke/Dicke des Schlauches, bzw. die Wandstärke/Dicke der einzelnen Schichten ist nicht beschränkt. Die geeignete Wandstärke/Dicke des Schlauches, bzw. die Wandstärke/Dicke der einzelnen Schichten wird der Fachmann je nach der geplanten Verwendung des Schlauches und den damit verbundenen Anforderungen anpassen.

Es ist jedoch bevorzugt, wenn die innerste Schicht des Schlauches, die vorzugsweise den mindestens einen berührungslos detektierbaren Marker umfasst, eine Wandstärke/Dicke von 0,03 bis 30 mm aufweist.

Der erfindungsgemäße Schlauch ist derart, dass der Schlauch einen oder mehrere Druckträger, insbesondere ein Garn und/oder ein Geflecht umfasst. Unter einem Druckträger versteht man eine Vorrichtung, die in den Schlauch eingearbeitet wird, sodass der Schlauch einem höheren Innendruck widerstehen kann, ohne zu platzen und/oder aufzureißen. Der Druckträger kann in oder zwischen jede Schicht des Schlauches, vorzugsweise nicht in die Innenschicht, eingearbeitet werden und/oder als Umlage um den Schlauch gelegt werden. Zudem kann in den Schlauch eine Wendel aus Kunststoff oder Stahl eingearbeitet werden, damit auch ein Betrieb im Vakuum möglich ist.

Der erfindungsgemäße Schlauch umfasst vorzugsweise die üblichen in der Kunststoff- bzw. Elastomerindustrie verwendeten Additive. Diese umfassen beispielsweise Additive ausgewählt aus der Gruppe bestehend aus Siliziumdioxid (Silica/Kieselsäure), Kaolin, Titandioxid, Fettsäuren, Weichmacher, Gleitmittel, Geruchsabsorber, antimikrobielle Substanzen, organische + anorganische Farbpigment, Haftvermittler, Verarbeitungshilfsmittel, Flammschutzmittel, Alterungsschutzmittel, Metalloxide+ Metallhydroxide, Verzögerer, Aktivatoren, Faktis, Graphit, Carbon Nanotubes, Kohlefasern und/oder Ruß.

Diese Additive liegen vorzugsweise jeweils in einer Menge von 0,1 bis 60 Gew.-%, bezogen auf das Gesamtgewicht der jeweiligen Schlauchschicht bzw. Dichtungsschicht, in dieser vor.

In einer besonders bevorzugten Ausführungsform umfasst der erfindungsgemäße Schlauch 100 phr mindestens eines Ethylen-Propylen-Dien-Kautschuks, 35 bis 45 phr mindestens eines Kaolins, 30 bis 40 phr mindestens einer Kieselsäure, 5 bis 15 phr Weissöl, 5 bis 25 phr mindestens eines Metalloxids, wie Titanoxid und/oder Zinkoxid, 2 bis 10 phr mindestens einer Fettsäure und/oder eines Fettäuresalzes, 1 bis 5 phr eines Vernetzungsmittels, wie Schwefel und/oder einer Schwefelverbindung, sowie 25 phr Fe^{II}(Fe^{III})₂O₄, vorzugsweise mit einer Partikelgröße von 0,2 bis 500 µm, bevorzugt von 0,25 bis 300 µm und besonders bevorzugt von 2 bis 150 µm.

In einer weiteren besonders bevorzugten Ausführungsform umfasst der erfindungsgemäße Schlauch 100 phr mindestens eines Ethylen-Propylen-Dien-Kautschuks, 35 bis 45 phr mindestens eines Kaolins, 30 bis 40 phr mindestens einer Kieselsäure, 5 bis 15 phr Weissöl, 5 bis 25 phr mindestens eines Metalloxids, wie Titanoxid und/oder Zinkoxid, 2 bis 10 phr mindestens einer Fettsäure und/oder eines Fettäuresalzes, 1 bis 5 phr eines Vernetzungsmittels, wie Schwefel und/oder einer Schwefelverbindung, sowie 50 phr Fe^{II}(Fe^{III})₂O₄, vorzugsweise mit einer Partikelgröße von 0,2 bis 500 µm, bevorzugt von 0,25 bis 300 µm und besonders bevorzugt von 2 bis 150 µm.

In einer weiteren besonders bevorzugten Ausführungsform umfasst der erfindungsgemäße Schlauch 100 phr mindestens eines Ethylen-Propylen-Dien-Kautschuks, 35 bis 45 phr mindestens eines Kaolins, 30 bis 40 phr mindestens einer Kieselsäure, 5 bis 15 phr Weissöl, 5 bis 25 phr mindestens eines Metalloxids, wie Titanoxid und/oder Zinkoxid, 2 bis 10 phr mindestens einer Fettsäure und/oder eines Fettäuresalzes, 1 bis 5 phr eines Vernetzungsmittels, wie Schwefel und/oder einer Schwefelverbindung, sowie 75 phr Fe^{II}(Fe^{III})₂O₄, vorzugsweise mit einer Partikelgröße von 0,2 bis 500 µm, bevorzugt von 0,25 bis 300 µm und besonders bevorzugt von 2 bis 150 µm.

In einer weiteren besonders bevorzugten Ausführungsform umfasst der erfindungsgemäße Schlauch etwa 100 phr mindestens eines Ethylen-Propylen-Dien-Kautschuks, 35 bis 45 phr mindestens eines Kaolins, 30 bis 40 phr mindestens einer Kieselsäure, 5 bis 15 phr Weissöl, 5 bis 25 phr mindestens eines Metalloxids, wie Titanoxid und/oder Zinkoxid, 2 bis 10 phr mindestens einer Fettsäure und/oder eines Fettäuresalzes, 1 bis 5 phr eines Vernetzungsmittels, wie Schwefel und/oder einer Schwefelverbindung, sowie 130 phr Fe^{II}(Fe^{III})₂O₄, vorzugsweise mit einer Partikelgröße von 0,2 bis 500 µm, bevorzugt von 0,25 bis 300 µm und besonders bevorzugt von 2 bis 150 µm.

In einer weiteren besonders bevorzugten Ausführungsform umfasst der erfindungsgemäße Schlauch etwa 100 phr mindestens eines Ethylen-Propylen-Dien-Kautschuks, 35 bis 45 phr mindestens eines Kaolins, 30 bis 40 phr mindestens einer Kieselsäure, 5 bis 15 phr Weissöl, 5 bis 25 phr mindestens eines Metalloxids, wie Titanoxid und/oder Zinkoxid, 2 bis 10 phr mindestens einer Fettsäure und/oder eines Fettäuresalzes, 1 bis 5 phr eines Vernetzungsmittels, wie Schwefel und/oder einer Schwefelverbindung, sowie 200 phr Fe^{II}(Fe^{III})₂O₄, vorzugsweise mit einer Partikelgröße von 0,2 bis 500 µm, bevorzugt von 0,25 bis 300 µm und besonders bevorzugt von 2 bis 150 µm.

In einer weiteren besonders bevorzugten Ausführungsform umfasst der erfindungsgemäße Schlauch etwa 100 phr mindestens eines Ethylen-Propylen-Dien-Kautschuks, 35 bis 45 phr mindestens eines Kaolins, 30 bis 40 phr mindestens einer Kieselsäure, 5 bis 15 phr Weissöl, 5 bis 25 phr mindestens eines Metalloxids, wie Titanoxid und/oder Zinkoxid, 2 bis 10 phr mindestens einer Fettsäure und/oder eines Fettäuresalzes, 1 bis 5 phr eines Vernetzungsmittels, wie Schwefel und/oder einer Schwefelverbindung, sowie 300 phr Fe^{II}(Fe^{III})₂O₄, vorzugsweise mit einer Partikelgröße von 0,2 bis 500 µm, bevorzugt von 0,25 bis 300 µm und besonders bevorzugt von 2 bis 150 µm.

In einer weiteren besonders bevorzugten Ausführungsform umfasst der erfindungsgemäße Schlauch etwa 100 phr mindestens eines Ethylen-Propylen-Dien-Kautschuks, 35 bis 45 phr mindestens eines Kaolins, 30 bis 40 phr mindestens einer Kieselsäure, 5 bis 15 phr Weissöl, 5 bis 25 phr mindestens eines Metalloxids, wie Titanoxid und/oder Zinkoxid, 2 bis 10 phr mindestens einer Fettsäure und/oder eines Fettäuresalzes, 1 bis 5 phr eines Vernetzungsmittels, wie Schwefel und/oder einer Schwefelverbindung, sowie 400 phr Fe^{II}(Fe^{III})₂O₄, vorzugsweise mit einer Partikelgröße von 0,2 bis 500 µm, bevorzugt von 0,25 bis 300 µm und besonders bevorzugt von 2 bis 150 µm.

Die erfindungsgemäßen Schläuche können über die üblichen in der Schlauchherstellung bekannten Verfahren hergestellt werden, wie beispielsweise durch Extrusion oder Wickelverfahren, wie sie beispielsweise im Buch "Kautschuktechnologie" von Röthemeyer/Sommer (3. Auflage. 10/2013) beschrieben sind.

Die Verarbeitung der vorstehend genannten Polymere zu den entsprechenden Dichtungen erfolgt vorzugsweise mit den bekannten und üblichen, dem Fachmann vertrauten Maschinen und Verfahren, wie Spritzguss, Extrusion, Sintern, Vulkanisation und/oder Stanzen.

Die vorliegende Erfindung betrifft außerdem die Verwendung eines Schlauches wie vorstehend beschrieben mit einem berührungslos detektierbaren Marker, der mindestens einen mittels Röntgenstrahlung und/oder einem elektromagnetischen Feld detektierbare Stoff umfasst, zur Detektion der Abnutzung des Schlauches, wie vorstehend beschrieben.

Bei der Verwendung eines berührungslos detektierbaren Markers, der mindestens einen mittels Röntgenstrahlung und/oder einem elektromagnetischen Feld detektierbare Stoff umfasst, zur Detektion der Abnutzung eines Schlauches, wie vorstehend beschrieben, ist es bevorzugt, dass der mindestens eine mittels Röntgenstrahlung und/oder einem elektromagnetischen Feld detektierbare Stoff zur Detektion der Abnutzung des Schlauches oder einer Dichtung mindestens einen mittels Röntgenstrahlung und/oder einem elektromagnetischen Feld detektierbare Stoff mit einer Partikelgröße von 0,2 bis 500 µm, bevorzugt von 0,25 bis 300 µm, umfasst.

Der mindestens eine mittels Röntgenstrahlung und/oder einem elektromagnetischen Feld detektierbare Stoff ist wie vorstehend definiert zu verstehen.

Als Detektor wird hierbei vorzugsweise ein übliches Röntgengerät und/oder ein übliches Metallsuchgerät, auf elektromagnetischer Basis arbeitend, eingesetzt. Geeignete Detektoren werden beispielsweise von der Pulsotronic Anlagentechnik vertrieben.

Die vorliegende Erfindung betrifft auch ein Verfahren zur Detektion der Abnutzung eines Schlauches wie vorstehend definiert, umfassend den Schritt des Detektierens des berührungslos detektierbaren Markers, der mindestens einen mittels Röntgenstrahlung und/oder einem elektromagnetischen Feld detektierbare Stoff umfasst, mit einem Detektor, bevorzugt in einem Medium, das den Schlauch durchlaufen hat.

Es ist bevorzugt das erfindungsgemäße Verfahren in der Lebensmittel-, Trinkwasser und/oder pharmazeutischen Industrie anzuwenden. Gemäß dem erfindungsgemäßen Verfahren kann die Abnutzung der verwendeten Schläuche und die damit verbundenen Kontamination der Medien, die die Schläuche durchlaufen mit Partikeln des Schlauchmaterials frühzeitig erkannt und damit beseitigt werden.

In dem erfindungsgemäßen Verfahren ist es bevorzugt, dass der mindestens eine mittels Röntgenstrahlung und/oder einem elektromagnetischen Feld detektierbare Stoff, mindestens einen mittels Röntgenstrahlung und/oder einem elektromagnetischen Feld detektierbare Stoff mit einer Partikelgröße von 0,2 bis 500 µm, bevorzugt von 0,25 bis 300 µm und besonders bevorzugt von 2 bis 150 µm umfasst.

Das Verfahren ist ferner vorzugsweise dadurch gekennzeichnet, dass der Detektor ein übliches Röntgengerät und/oder ein übliches Metallsuchgerät, auf elektromagnetischer Basis arbeitend, ist. Geeignete Detektoren werden beispielsweise von der Pulsotronic Anlagentechnik vertrieben.

Die Erfindung wird nachfolgend anhand von Beispielen erläutert. Die Beispiele dienen dabei lediglich der Illustration der Erfindung und sind in keiner Weise beschränkend.

### Beispiele:

### Beispiel 1:

Es wurde die folgenden Elastomermischungen hergestellt.

**Tabelle 1:**

| | **Ref.** | **D007** | **D011** | **D012** | **D019** | **D030** | **D031** | **D032** |
|---|---|---|---|---|---|---|---|---|
| phr-Summe | 225,2 | 239 | 263 | 288 | 361 | 431 | 531 | 631 |
| kristalliner Ethylen-Propylen-Dien- | 50 | 50 | 50 | 50 | 50 | 50 | 50 | 50 |
| amorpher Ethylen-Propylen-Dien- | 50 | 50 | 50 | 50 | 50 | 50 | 50 | 50 |
| Kaolin | 40,5 | 40 | 40 | 40 | 40 | 40 | 40 | 40 |
| Kiesel-säure | 32,4 | 30 | 30 | 30 | 30 | 30 | 30 | 30 |
| Weissöl | 11 | 10 | 10 | 10 | 10 | 10 | 10 | 10 |
| Ti-Oxid | 22,5 | 20 | 20 | 20 | 40 | 40 | 40 | 40 |
| Zn-Oxid | 6,5 | 5 | 5 | 5 | 5 | 5 | 5 | 5 |
| Stearin-säure | 3,3 | 1 | 1 | 1 | 1 | 1 | 1 | 1 |
| Zn-Stearat | 3,3 | --- | --- | --- | --- | --- | --- | --- |
| Poly-glycol 4000 S | 2,2 | 2 | 2 | 2 | | | | |
| Bis(dimethylthi o-carbamoyl)disul | 2,4 | 2 | 2 | 2 | 2 | 2 | 2 | 2 |
| Mahl-schwefel | 1,4 | 1 | 1 | 1 | 1 | 1 | 1 | 1 |
| Säurefänger (Magnesiumalu miniumhydroxid carbonat | --- | 3 | 2 | 2 | 2 | 2 | 2 | 2 |
| Fe^{II}(Fe^{III})₂O₄ (d₉₀ = 25µm) | --- | 25 | 50 | 75 | 130 | 200 | 300 | 400 |

| | | | | | | | | |
|---|---|---|---|---|---|---|---|---|
| Ref.: Vergleichsbeispiel phr: "parts per hundred rubber" | | | | | | | | |

### Beispiel 2:

Die Elastomermischungen gemäß Beispiel 1 wurde auf ihre Materialeigenschaften geprüft. Die Ergebnisse der Materialprüfung sind in Tabelle 2 und 3 zusammengefasst.

**Tabelle 2:**

| **Prüfung** | **Ref.** | **D007** | **D011** | **D012** | **D019** | **D030** | **D031** | **D032** |
|---|---|---|---|---|---|---|---|---|
| ML 1+4 @125°C (DIN 52523:1991) | 32,81 | 61,08 | 68,79 | 25,31 | 83,43 | 65,55 | k.A. | 65,51 |
| **Vulka-meterprüfung (DIN 53529:1983)** | | | | | | | | |
| Fe-Fa | 16,7 | 18,27 | 25,69 | 28,78 | 18,22 | 12,4 | 13,39 | 14,68 |
| Fe | 18,18 | 22,45 | 30,36 | 34,11 | 23,74 | 23,66 | 30,24 | 37,07 |
| Fa | 1,48 | 4,18 | 4,67 | 5,33 | 5,52 | 11,26 | 16,85 | 22,39 |
| t 10 | 1,11 | 0,81 | 1 | 1 | 0,93 | 0,43 | 0,4 | 0,45 |
| t 90 | 15,61 | 17,21 | 17,3 | 16,76 | 17,37 | 20,12 | 21,52 | 20,23 |

| | | | | | | | | |
|---|---|---|---|---|---|---|---|---|
| Fe: Enddrehmoment Fa: Anfangsdrehmoment | | | | | | | | |

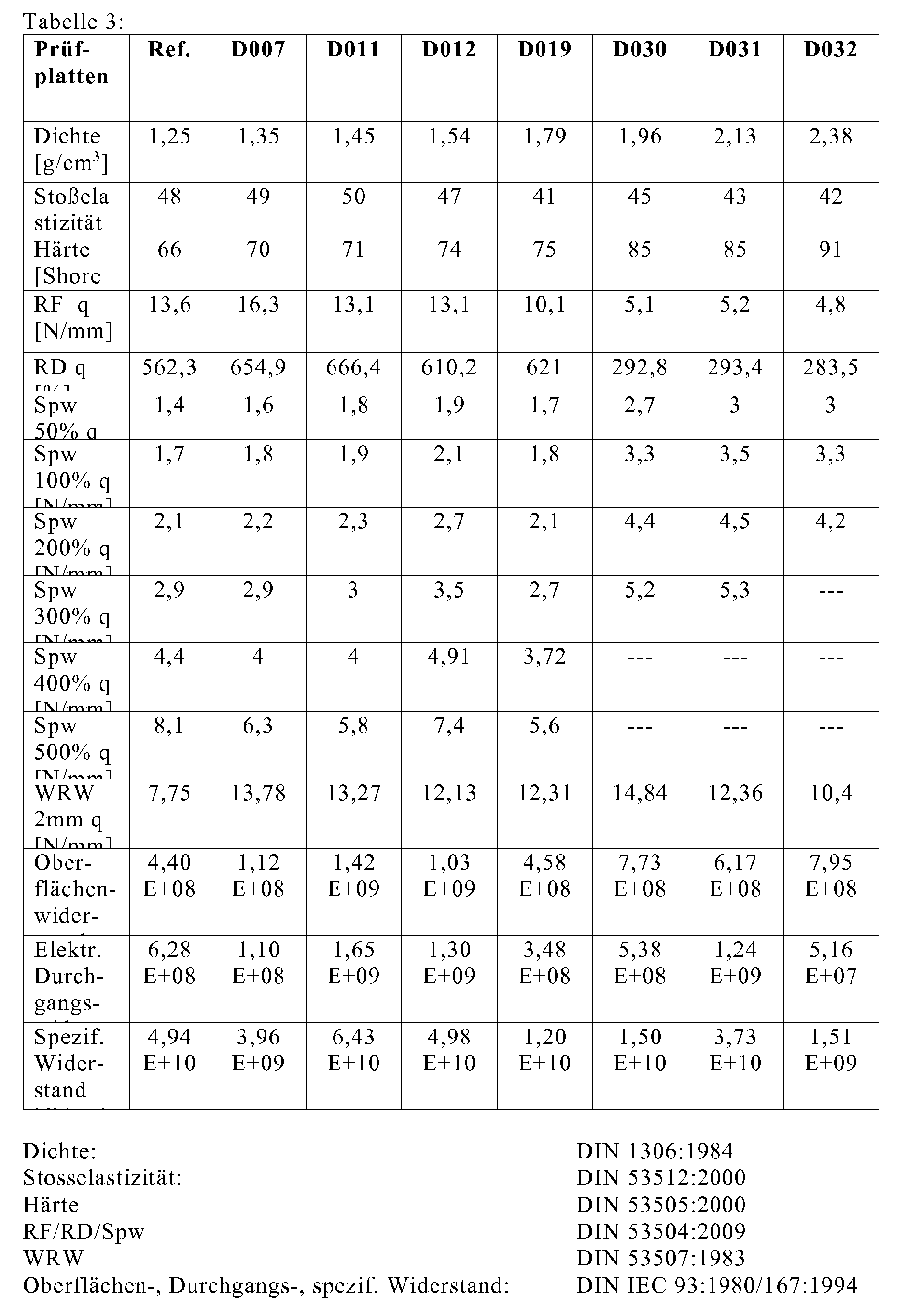

### Beispiel 3:

Die in Beispiel 1 hergestellten Elastomermischungen wurden auf ihre elektromagnetische Detektierbarkeit geprüft.

Dazu wurde ein elektromagnetischer Handdetektor IY250121 (Fa. IPF) auf höchste Intensität eingestellt und das kleinste Volumen an Elastomermischung ermittelt, das noch detektierbar war.

Dazu wird der Detektor auf höchste Intensität eingestellt. Anschließend wird eine Elastomerprobe zugeschnitten (ca. 2cm x 1,5cm x 1cm) und dann mittels Plastik-Pinzette durch die Spulenöffnung geführt. Die Probe ergibt ein Signal. Von der Elastomerprobe wird nun fortlaufend Material abgeschnitten und geprüft, solange bis kein Signal mehr detektiert werden kann. In der Tabelle ist die kleinste Dimension aufgeführt, bei der noch ein Signal erfolgte (Angabe in Länge x Breite x Höhe = Volumen in cm³). Zudem wird bestimmt, ob die Elastomerprobe mit einem kleinen Permanentmagneten angezogen wird oder nicht.

| | **Ref.** | **D007** | **D011** | **D012** | **D019** | **D030** | **D031** | **D032** |
|---|---|---|---|---|---|---|---|---|
| Menge Fe^{II}(Fe^{III})₂O₄ (d₉₀ = 25µm) | 0 | 25K % | 50K % | 75K % | 130K % | 200K % | 300K % | 400K % |
| Menge Fe^{II}(Fe^{III})₂O₄ (d₉₀ = 25µm) | 0 | 10,5 M% | 19M % | 26M % | 36M % | 46,4 M% | 56,5 M% | 63,4 M% |
| Magn. Signal (kleinste Dimension) | --- --- | 1,92x 1,12x 0,63 cm | 1,61x 0,69x 0,62 cm | 1,1x 0,65x 0,64 cm | 0,72x 0,65x 0,66 cm | 0,69x 0,66x 0,56 cm | 0,78x 0,5x 0,34 cm | 0,7x 0,53x 0,33 cm |
| Detektor IY250121 (Fa. IPF) | | | | | | | | |
| | | 1,35 cm3 | 0,69 cm3 | 0,46 cm³ | 0,31 cm3 | 0,26 cm3 | 0,14 cm3 | 0,12 cm3 |
| Anziehend auf Permanentmagnet | nein | ja | ja | ja | ja | ja | ja | ja |

## Patentansprüche

1. Mehrschichtiger Schlauch, umfassend mindestens eine Schicht, die mindestens ein Polymer und mindestens einen berührungslos detektierbaren Marker umfasst, wobei der berührungslos detektierbare Marker mindestens einen mittels Röntgenstrahlung und/oder einem elektromagnetischen Feld detektierbaren Stoff umfasst, wobei der mittels Röntgenstrahlung und/oder einem elektromagnetischen Feld detektierbare Stoff ein Mischoxid wenigstens zweier Metalle mit den Metallkomponenten Eisen, Kobalt, Nickel, Zinn, Zink, Mangan, Kupfer, Barium, Magnesium, Lithium oder Yttrium umfasst.

2. Mehrschichtiger Schlauch gemäß Anspruch 1, **dadurch gekennzeichnet, dass** der berührungslos detektierbare Marker mindestens einen mittels Röntgenstrahlung und/oder einem elektromagnetischen Feld detektierbaren Stoff mit einer mittleren Partikelgröße (d₉₀) ermittelt nach der Cyclosizer Methode gemäß DIN EN ISO 1248:2008-06 von 0,2 bis 500 µm, bevorzugt von 0,25 bis 300 µm und besonders bevorzugt von 2 bis 150 µm umfasst.

3. Mehrschichtiger Schlauch gemäß irgendeinem der vorhergehenden Ansprüche, **dadurch gekennzeichnet, dass** das mindestens eine Polymer einen Kunststoff, ein Elastomer und/oder ein thermoplastisches Elastomer umfasst.

4. Mehrschichtiger Schlauch gemäß Anspruch 3, **dadurch gekennzeichnet, dass**
- der mindestens eine Kunststoff ausgewählt ist aus der Gruppe bestehend aus Polyethylen, ultrahochmolekularem Polyethylen (UPE), Polypropylen, Polyamid, Polyester, aromatische Polyester, Polyvinylchlorid, Polyethersulfon, Polyetheretherketon (PEEK), Ethylen-Tetrafluorethylen (ETFE), chlorierte Fluorkunststoffe (PCTFE, ECTFE),Tetrafluorethylen-Hexafluorpropylen-Vinylidenfluorid-Terpolymer (THV), Polyvinylidenfluorid (PVF), Polyvinylidendifluorid (PVDF), Perfluoralkoxy-Polymer (MFA + PFA), Tetrafluorethylen-Hexafluorpropylen-Copolymer (FEP), Polytetrafluorethylen (PTFE), sowie Mischungen und Copolymeren davon und/oder, dass
- das mindestens eine Elastomer ausgewählt ist aus der Gruppe bestehend aus Acrylatkautschuken (AEM), Ethylen-Vinylacetat-Kautschuken (EVA), Polybutadien (BR), Chlorsulfoniertes Polyethylen (CSM), Chloriertes Polyethylen (CM), Epichlorhydrin-Kautschuken (ECO), Chloroprenkautschuken (CR), Polyisopren (IR), Fluorkautschuk (FPM, FKM, FFKM), Styrol-Butadien-Kautschuken (SBR), Isobutylen-Isopren-Kautschuken (IIR), halogenierten Isobutylen-Isopren- Kautschuken (CIIR + BIIR), Acrylnitril-Butadien-Kautschuken (NBR), teilhydrierten oder vollständig hydrierten Acrylnitrilbutadien-Kautschuken (HNBR), Verschnitte aus NBR mit PVC (NBR-PVC), teihydrierten oder vollständig hydrierten carboxylierten Acrylnitrilbutadien-Kautschuken, Ethylen-Propylen-Dien-Kautschuken (EPDM), Ethylen-Propylen- Kautschuken (EPM), Naturkautschuk (NR), bromierten Isobutylen-Paramethylstyrol-Kautschuken, Silikonkautschuken (MVQ), sowie Mischungen, Verschnitte und Copolymeren davon und/oder, dass
- das mindestens eine thermoplastische Elastomer ausgewählt ist aus der Gruppe bestehend aus thermoplasischen Copolyamid (TPA-A), thermoplastischen Polyesterelastomer (TPE-E), Thermoplastische Elastomere auf Olefinbasis (TPE-O), Styrol-Blockcopolymere (TPE-S), Thermoplastische Elastomere auf Urethanbasis (TPE-U), Thermoplastische Vulkanisate oder vernetzte thermoplastische Elastomere auf Olefinbasis (TPE-V).

5. Mehrschichtiger Schlauch gemäß irgendeinem der vorhergehenden Ansprüche, **dadurch gekennzeichnet, dass** der mittels Röntgenstrahlung und/oder einem elektromagnetischen Feld detektierbare Stoff die allgemeinen Formel M^{II}(Fe^{III})₂O₄ aufweist, wobei M Eisen, Kobalt, Nickel, Zinn, Zink, Mangan, Kupfer, Barium, Magnesium, Lithium oder Yttrium ist.

6. Mehrschichtiger Schlauch gemäß irgendeinem der vorhergehenden Ansprüche, **dadurch gekennzeichnet, dass** der mittels Röntgenstrahlung und/oder einem elektromagnetischen Feld detektierbare Stoff Fe^{II}(Fe^{III})₂O₄ ist.

7. Mehrschichtiger Schlauch gemäß irgendeinem der vorhergehenden Ansprüche, **dadurch gekennzeichnet, dass** der mittels Röntgenstrahlung und/oder einem elektromagnetischen Feld detektierbare Stoff in einer Menge von 0,5 bis 80 Gew.-%, bevorzugt von 2,5 bis 60 Gew.-%, bezogen auf das Gesamtgewicht der jeweiligen Schlauchschicht, in dieser Schlauchschicht bzw. Dichtungsschicht vorliegt.

8. Mehrschichtiger Schlauch gemäß irgendeinem der vorhergehenden Ansprüche, **dadurch gekennzeichnet, dass** der berührungslos detektierbare Marker, der mindestens einen mittels Röntgenstrahlung und/oder einem elektromagnetischen Feld detektierbaren Stoff umfasst, mindestens in der innersten Schicht des mehrschichtigen Schlauches vorliegt.

9. Mehrschichtiger Schlauch gemäß irgendeinem der vorhergehenden Ansprüche, **dadurch gekennzeichnet, dass** der Schlauch einen Druckträger, insbesondere ein Garn und/oder ein Geflecht umfasst.

10. Verwendung eines mehrschichtigen Schlauches gemäß irgendeinem der Ansprüche 1 bis 9 mit dem berührungslos detektierbaren Marker, der mindestens einen mittels Röntgenstrahlung und/oder einem elektromagnetischen Feld detektierbaren Stoff umfasst, wobei der mittels Röntgenstrahlung und/oder einem elektromagnetischen Feld detektierbare Stoff ein Mischoxid wenigstens zweier Metalle mit den Metallkomponenten Eisen, Kobalt, Nickel, Zinn, Zink, Mangan, Kupfer, Barium, Magnesium, Lithium oder Yttrium umfasst, zur Detektion der Abnutzung des mehrschichtigen Schlauches gemäß irgendeinem der Ansprüche 1 bis 9.

11. Verwendung gemäß Anspruch 10, **dadurch gekennzeichnet, dass** der mindestens eine mittels Röntgenstrahlung und/oder einem elektromagnetischen Feld detektierbare Stoff zur Detektion der Abnutzung des mehrschichtigen Schlauches mindestens einen mittels Röntgenstrahlung und/oder einem elektromagnetischen Feld detektierbaren Stoff mit einer Partikelgröße von 0,2 bis 500 µm, bevorzugt von 0,25 bis 300 µm, umfasst.

12. Verfahren zur Detektion der Abnutzung eines mehrschichtigen Schlauches gemäß irgendeinem der Ansprüche 1 bis 9, umfassend den Schritt des Detektierens des berührungslos detektierbaren Markers, der mindestens einen mittels Röntgenstrahlung und/oder einem elektromagnetischen Feld detektierbaren Stoff umfasst, wobei der mittels Röntgenstrahlung und/oder einem elektromagnetischen Feld detektierbare Stoff ein Mischoxid wenigstens zweier Metalle mit den Metallkomponenten Eisen, Kobalt, Nickel, Zinn, Zink, Mangan, Kupfer, Barium, Magnesium, Lithium oder Yttrium umfasst, mit einem Detektor, bevorzugt in einem Medium, das den Schlauch durchlaufen hat.

13. Verfahren zur Detektion gemäß Anspruch 12, **dadurch gekennzeichnet, dass** der mindestens eine mittels Röntgenstrahlung und/oder einem elektromagnetischen Feld detektierbaren Stoff, mindestens einen mittels Röntgenstrahlung und/oder einem elektromagnetischen Feld detektierbaren Stoff mit einer mittleren Partikelgröße (d₉₀) ermittelt nach der Cyclosizer Methode gemäß DIN EN ISO 1248:2008-06 von 0,2 bis 500 µm, bevorzugt von 0,25 bis 300 µm und besonders bevorzugt von 2 bis 150 µm umfasst.

## Claims

1. Multilayer hose comprising at least one layer which comprises at least one polymer and at least one contactlessly detectable marker, wherein the contactlessly detectable marker comprises at least one substance detectable via X-radiation and/or an electromagnetic field, where the substance detectable via X-radiation and/or an electromagnetic field comprises a mixed oxide of at least two metals with the metal components iron, cobalt, nickel, tin, zinc, manganese, copper, barium, magnesium, lithium or yttrium.

2. Multilayer hose according to Claim 1, **characterized in that** the contactlessly detectable marker comprises at least one substance detectable via X-radiation and/or an electromagnetic field and having a mean particle size (d₉₀), determined by the Cyclosizer method according to DIN EN ISO 1248:2008-06, of 0.2 to 500 µm, preferably of 0.25 to 300 µm and more preferably of 2 to 150 µm.

3. Multilayer hose according to any of the preceding claims, **characterized in that** the at least one polymer comprises a plastic, an elastomer and/or a thermoplastic elastomer.

4. Multilayer hose according to Claim 3, **characterized in that**
- the at least one plastic is selected from the group consisting of polyethylene, ultra-high molecular mass polyethylene (UPE), polypropylene, polyamide, polyesters, aromatic polyesters, polyvinyl chloride, polyethersulfone, polyetheretherketone (PEEK), ethylene-tetrafluoroethylene (ETFE), chlorinated fluoropolymers (PCTFE, ECTFE), tetrafluoroethylene-hexafluoropropylene-vinylidene fluoride terpolymer (THV), polyvinylidene fluoride (PVF), polyvinylidene difluoride (PVDF), perfluoroalkoxy polymer (MFA + PFA), tetrafluoroethylene-hexafluoropropylene copolymer (FEP), polytetrafluoroethylene (PTFE), and also mixtures and copolymers thereof,
and/or **in that**
- the at least one elastomer is selected from the group consisting of acrylate rubbers (AEM), ethylene-vinyl acetate rubbers (EVA), polybutadiene (BR), chlorosulfonated polyethylene (CSM), chlorinated polyethylene (CM), epichlorohydrin rubbers (ECO), chloroprene rubbers (CR), polyisoprene (IR), fluoro rubber (FPM, FKM, FFKM), styrene-butadiene rubbers (SBR), isobutylene isoprene rubbers (IIR), halogenated isobutylene-isoprene rubbers (CIIR + BIIR), acrylonitrile-butadiene rubbers (NBR), partially hydrogenated or fully hydrogenated acrylonitrile-butadiene rubbers (HNBR), blends of NBR with PVC (NBR-PVC), partially hydrogenated or fully hydrogenated carboxylated acrylonitrile-butadiene rubbers, ethylene-propylene-diene rubbers (EPDM), ethylene-propylene rubbers (EPM), natural rubber (NR), brominated isobutylene-para-methylstyrene rubbers, silicone rubbers (MVQ), and also mixtures, blends and copolymers thereof, and/or **in that**
- the at least one thermoplastic elastomer is selected from the group consisting of thermoplastic copolyamide (TPA-A), thermoplastic polyester elastomer (TPE-E), olefin-based thermoplastic elastomers (TPE-O), styrene block copolymers (TPE-S), urethane-based thermoplastic elastomers (TPE-U), thermoplastic vulcanizates or crosslinked, olefin-based thermoplastic elastomers (TPE-V).

5. Multilayer hose according to any of the preceding claims, **characterized in that** the substance detectable via X-radiation and/or an electromagnetic field has the general formula M^{II}(Fe^{III})₂O₄, where M is iron, cobalt, nickel, tin, zinc, manganese, copper, barium, magnesium, lithium or yttrium.

6. Multilayer hose according to any of the preceding claims, **characterized in that** the substance detectable via X-radiation and/or an electromagnetic field is Fe^{II}(Fe^{III})₂O₄.

7. Multilayer hose according to any of the preceding claims, **characterized in that** the substance detectable via X-radiation and/or an electromagnetic field is present in an amount of 0.5 to 80 wt%, preferably of 2.5 to 60 wt%, based on the total weight of the respective hose layer, in this hose layer or seal layer.

8. Multilayer hose according to any of the preceding claims, **characterized in that** the contactlessly detectable marker which comprises at least one substance detectable via X-radiation and/or an electromagnetic field is present at least in the innermost layer of the multilayer hose.

9. Multilayer hose according to any of the preceding claims, **characterized in that** the hose comprises a pressure-resistant structure, more particularly a yarn and/or a braid.

10. Use of a multilayer hose according to any of Claims 1 to 9, with the contactlessly detectable marker which comprises at least one substance detectable via X-radiation and/or an electromagnetic field, where the substance detectable via X-radiation and/or an electromagnetic field comprises a mixed oxide of at least two metals with the metal components iron, cobalt, nickel, tin, zinc, manganese, copper, barium, magnesium, lithium or yttrium for detecting the wear of the multilayer hose according to any of Claims 1 to 9.

11. Use according to Claim 10, **characterized in that** the at least one substance detectable via X-radiation and/or an electromagnetic field for detecting the wear of the multilayer hose comprises at least one substance detectable via X-radiation and/or an electromagnetic field and having a particle size of 0.2 to 500 µm, preferably of 0.25 to 300 µm.

12. Method for detecting the wear of a multilayer hose according to any of Claims 1 to 9, comprising the step of detecting the contactlessly detectable marker which comprises at least one substance detectable via X-radiation and/or an electromagnetic field, where the substance detectable via X-radiation and/or an electromagnetic field comprises a mixed oxide of at least two metals with the metal components iron, cobalt, nickel, tin, zinc, manganese, copper, barium, magnesium, lithium or yttrium, using a detector, preferably in a medium which has passed through the hose.

13. Method for detection according to Claim 12, **characterized in that** the at least one substance detectable via X-radiation and/or an electromagnetic field comprises at least one substance detected via X-radiation and/or an electromagnetic field and having a mean particle size (d₉₀), determined by the Cyclosizer method according to DIN EN ISO 1248:2008-06, of 0.2 to 500 µm, preferably of 0.25 to 300 µm and more preferably of 2 to 150 µm.

## Revendications

1. Tuyau multicouche, comprenant au moins une couche qui comprend au moins un polymère et au moins un marqueur détectable sans contact, le marqueur détectable sans contact comprenant au moins une matière détectable au moyen de rayons X et/ou d'un champ électromagnétique, la matière détectable au moyen de rayons X et/ou d'un champ électromagnétique comprenant un oxyde mixte d'au moins deux métaux comportant les composants métalliques fer, cobalt, nickel, étain, zinc, manganèse, cuivre, baryum, magnésium, lithium ou yttrium.

2. Tuyau multicouche selon la revendication 1, **caractérisé en ce que** le marqueur détectable sans contact comprend au moins une matière détectable au moyen de rayons X et/ou d'un champ électromagnétique, dotée d'une taille moyenne de particule (d₉₀) déterminée par la méthode Cyclosizer selon la norme DIN EN ISO 1248:2008-06 de 0,2 à 500 µm, préférablement de 0,25 à 300 µm et particulièrement préférablement de 2 à 150 µm.

3. Tuyau multicouche selon l'une quelconque des revendications précédentes, **caractérisé en ce que** l'au moins un polymère comprend une matière plastique, un élastomère et/ou un élastomère thermoplastique.

4. Tuyau multicouche selon la revendication 3, **caractérisé en ce que**
- l'au moins une matière plastique est choisie dans le groupe constitué par un polyéthylène, un polyéthylène à poids moléculaire ultra élevé (UPE), un polypropylène, un polyamide, un polyester, des polyesters aromatiques, un poly(chlorure de vinyle), une polyéthersulfone, une polyétheréthercétone (PEEK), un éthylène-tétrafluoroéthylène (ETFE), une matière plastique fluorée chlorée (PCTFE, ECTFE), un terpolymère de tétrafluoroéthylène-hexafluoropropylène-fluorure de vinylidène (THV), un poly(fluorure de vinylidène) (PVF), un poly(difluorure de vinylidène) (PVDF), un polymère de perfluoroalcoxy (MFA + PFA), un copolymère de tétrafluoroéthylène-hexafluoropropylène (FEP), un polytétrafluoroéthylène (PTFE), ainsi que des mélanges et des copolymères correspondants et/ou, **en ce que**
- l'au moins un élastomère est choisi dans le groupe constitué par des caoutchoucs d'acrylate (AEM), des caoutchoucs d'éthylène-acétate de vinyle (EVA), un polybutadiène (BR), un polyéthylène chlorosulfoné (CSM), un polyéthylène chloré (CM), des caoutchoucs d'épichlorhydrine (ECO), des caoutchoucs de chloroprène (CR), un polyisoprène (IR), un caoutchouc fluoré (FPM, FKM, FFKM), des caoutchoucs de styrène-butadiène (SBR), des caoutchoucs d'isobutylène-isoprène (IIR), des caoutchoucs d'isobutylène-isoprène halogénés (CIIR + BIIR), des caoutchoucs d'acrylonitrile-butadiène (NBR), des caoutchoucs d'acrylonitrile-butadiène partiellement hydrogénés ou totalement hydrogénés(HNBR), des coupes de NBR avec du PVC (NBR-PVC), des caoutchoucs d'acrylonitrile-butadiène carboxylés partiellement hydrogénés ou totalement hydrogénés, des caoutchoucs d'éthylène-propylène-diène (EPDM), des caoutchoucs d'éthylène-propylène (EPM), un caoutchouc naturel (NR), des caoutchoucs d'isobutylène-paraméthylstyrène bromés, des caoutchoucs de silicone (MVQ), ainsi que des mélanges, des coupes et des copolymères correspondantes, et/ou **en ce que**
- l'au moins un élastomère thermoplastique est choisi dans le groupe constitué par un copolyamide thermoplastique (TPA-A), un élastomère de polyester thermoplastique (TPE-E), des élastomères thermoplastiques à base d'oléfine (TPE-O), des copolymères à blocs de styrène (TPE-S), des élastomères thermoplastiques à base d'uréthane (TPE-U), des vulcanisats thermoplastiques ou des élastomères thermoplastiques réticulés à base d'oléfine (TPE-V).

5. Tuyau multicouche selon l'une quelconque des revendications précédentes, **caractérisé en ce que** la matière détectable au moyen de rayons X et/ou d'un champ électromagnétique présente la formule générale M^{II}(Fe^{III})₂O₄, M étant fer, cobalt, nickel, étain, zinc, manganèse, cuivre, baryum, magnésium, lithium ou yttrium.

6. Tuyau multicouche selon l'une quelconque des revendications précédentes, **caractérisé en ce que** la matière détectable au moyen de rayons X et/ou d'un champ électromagnétique est Fe^{II}(Fe^{III})₂O₄.

7. Tuyau multicouche selon l'une quelconque des revendications précédentes, **caractérisé en ce que** la matière détectable au moyen de rayons X et/ou d'un champ électromagnétique est présente en une quantité de 0,5 à 80 % en poids, préférablement de 2,5 à 60 % en poids, par rapport au poids total de la couche de tuyau respective, dans cette couche de tuyau ou couche d'étanchéité.

8. Tuyau multicouche selon l'une quelconque des revendications précédentes, **caractérisé en ce que** le marqueur détectable sans contact qui comprend au moins une matière détectable au moyen de rayons X et/ou d'un champ électromagnétique, est présent au moins dans la couche la plus intérieure du tuyau multicouche.

9. Tuyau multicouche selon l'une quelconque des revendications précédentes, **caractérisé en ce que** le tuyau comprend un renfort, en particulier un fil et/ou une tresse.

10. Utilisation d'un tuyau multicouche selon l'une quelconque des revendications 1 à 9 comportant le marqueur détectable sans contact qui comprend au moins une matière détectable au moyen de rayons X et/ou d'un champ électromagnétique, la matière détectable au moyen de rayons X et/ou d'un champ électromagnétique comprenant un oxyde mixte d'au moins deux métaux comportant les composants métalliques fer, cobalt, nickel, étain, zinc, manganèse, cuivre, baryum, magnésium, lithium ou yttrium, pour la détection de l'usure du tuyau multicouche selon l'une quelconque des revendications 1 à 9.

11. Utilisation selon la revendication 10, **caractérisée en ce que** l'au moins une matière détectable au moyen de rayons X et/ou d'un champ électromagnétique pour la détection de l'usure du tuyau multicouche comprend au moins une matière détectable au moyen de rayons X et/ou d'un champ électromagnétique dotée d'une taille de particule de 0,2 à 500 µm, préférablement de 0,25 à 300 µm.

12. Procédé de détection de l'usure d'un tuyau multicouche selon l'une quelconque des revendications 1 à 9, comprenant l'étape de la détection du marqueur détectable sans contact qui comprend au moins une matière détectable au moyen de rayons X et/ou d'un champ électromagnétique, la matière détectable au moyen de rayons X et/ou d'un champ électromagnétique comprenant un oxyde mixte d'au moins deux métaux comportant les composants métalliques fer, cobalt, nickel, étain, zinc, manganèse, cuivre, baryum, magnésium, lithium ou yttrium, avec un détecteur, préférablement dans un milieu qui est passé dans le tuyau.

13. Procédé de détection selon la revendication 12, **caractérisé en ce que** l'au moins une matière détectable au moyen de rayons X et/ou d'un champ électromagnétique comprend au moins une matière détectable au moyen de rayons X et/ou d'un champ électromagnétique dotée d'une taille moyenne de particule (d₉₀) déterminée par la méthode Cyclosizer selon la norme DIN EN ISO 1248:2008-06 de 0,2 à 500 µm, préférablement de 0,25 à 300 µm et particulièrement préférablement de 2 à 150 µm.
